# EUROPÄISCHE PATENTSCHRIFT

(11) **EP 4 447 176 B1**
(45) Veröffentlichungstag und Bekanntmachung des Hinweises auf die Patenterteilung: **14.01.2026**
(21) Anmeldenummer: 24164017.6
(22) Anmeldetag: 18.03.2024
(51) Int. Cl.: H01M 10/04, H01M 50/164, H01M 50/186, H01M 50/193, H01M 50/528, H01M 50/54, H01M 10/0585, H01M 50/184, H01M 50/59, H01M 10/052, H01M 10/058, H01M 10/0583, H01M 50/103, H01M 50/147, H01M 50/15, H01M 50/474, H01M 50/477, H01M 50/486, H01M 50/593, H01M 10/0525

(54) **BATTERIEZELLE MIT EINER ELEKTRODENABLEITER-ISOLIERUNG**
BATTERY CELL WITH AN ELECTRODE ARRESTER INSULATION
ÉLÉMENT DE BATTERIE COMPRENANT UNE ISOLATION DE COLLECTEUR D'ÉLECTRODE

(30) Priorität: 14.04.2023 DE 102023203411
(43) Veröffentlichungstag der Anmeldung: 16.10.2024
(73) Patentinhaber: PowerCo SE, 38239 Salzgitter (DE)
(72) Erfinder: Kwoczek, Lukas, 38239 Salzgitter (DE); Grau, Frederik, 38124 Braunschweig (DE)
(74) Vertreter: FDST Patentanwälte

(56) Entgegenhaltungen:
- EP-A1- 2 485 298
- EP-A1- 2 535 966
- EP-A1- 3 961 799
- WO-A1-2022/252165
- DE-T5- 112016 003 986

## Beschreibung

Die Erfindung betrifft eine Batteriezelle, umfassend: Einen Schichtstapel, welcher eine Mehrzahl an alternierend aufeinander gestapelten Anodenschichten und eine entsprechende Mehrzahl an Kathodenschichten sowie jeweils dazwischen angeordneten Separatorschichten aufweist, und ein Gehäuse, welches den Schichtstapel mit seitlich aus dem Schichtstapel geführten Anoden- bzw. Kathoden-Ableiterbahnen umschließt, und welches an einer Stirnseite des Schichtstapels einen Deckel mit innenseitigen Anoden- bzw. Kathoden-Stromsammlern aufweist.

Batteriezellen sind heute üblicherweise in drei verschiedenen Bauformen erhältlich: Prismatische Zellen weisen einen starren Rahmen bzw. ein starres Gehäuse auf, innerhalb dessen die einzelnen Anoden-, Kathoden- und Separatorschichten angeordnet sind. Die Schichten sind hierbei jeweils über Ableiterbahnen, die aus der Stapelung der Schichten geführt sind, mit einem entsprechenden Anoden- bzw. Kathodenanschluss verbunden, welche in das Gehäuse eingefasst sind. In zylindrischen Zellen sind Stapel von Anoden- und Kathodenschichten ineinander aufgewickelt, wobei die elektrische Kontaktierung für die Anoden- bzw. Kathodenschichten entlang der Zylinderachse bzw. an der Außenseite des Zylinders erfolgt. In sog. Pouch-Zellen sind die Anoden- und Kathodenschichten flächig aufeinander gestapelt, und zum Schutz vor der Umgebung von einer biegsamen Folie umschlossen, aus welcher lediglich zwei Leiterbahnen der Anoden bzw. Kathoden herausragen.

In prismatischen Batteriezellen bietet das starre Gehäuse nicht nur mechanische Stabilität für die Zelle, sondern ermöglicht auch die Verwendung stabiler elektrischer Anschlüsse, und erlaubt zudem eine gute thermische Anbindung an die Umgebung und somit eine vergleichsweise gute Abfuhr entstehender Wärme, was sich positiv auf die Lebensdauer der Zellen auswirkt.

Jedoch sind hierbei die Ableiterbahnen, welche aus dem Schichtstapel jeweils büschelweise zu einem Anoden- oder Kathoden-Stromsammler geführt und dort kontaktiert sind, gegen das Gehäuse elektrisch zu isolieren. Ggf. bilden diese Büschel innerhalb des Gehäuses zwischen dem Schichtstapel und den Stromsammlern noch eine Art Schlaufe, an welcher bevorzugt ebenfalls eine Isolierung zu erfolgen hat.

Die Applizierung einer solchen Isolierung ist produktionstechnisch schwer zu bewerkstelligen, da die Ableiterbahnen oft aus den unbeschichteten Kupfer- bzw. Aluminiumsubstrat-Folien der betreffenden Elektrodenschichten gebildet werden, und daher eine Dicke von teils nur 4µm bis 15µm aufweisen. Dementsprechend können diese Ableiterbahnen leicht knittern oder reißen. Somit fällt jedoch auch eine Führung der Ableiterbahnen derart, dass auf eine gesonderte Isolierung verzichtet werden kann, als Lösung aus. Die Fixierung von Isolierungen ist in diesem Kontext jedoch nicht trivial.

Der Erfindung liegt daher die Aufgabe zugrunde, eine Batteriezelle anzugeben, in welcher die Ableiterbahnen der einzelnen Elektrodenschichten in besonders einfach zu erzielender Weise gegen ein Gehäuse isoliert sind. Der Erfindung liegt zudem weiter die Aufgabe zugrunde, ein Verfahren zur Herstellung einer solchen Batteriezelle anzugeben.

Die erstgenannte Aufgabe wird erfindungsgemäß gelöst durch eine Batteriezelle, insbesondere eine prismatische Batteriezelle, welche einen Schichtstapel umfasst, der eine Mehrzahl an Anodenschichten und eine entsprechende Mehrzahl an Kathodenschichten aufweist, wobei die Anodenschichten und die Kathodenschichten alternierend aufeinander gestapelt sind, und zwischen jeder Anodenschicht und jeder Kathodenschicht jeweils eine Separatorschicht angeordnet ist, und wobei wenigstens an einer ersten Stirnseite des Schichtstapels zumindest von einigen der Anodenschichten und/oder einigen der Kathodenschichten Anoden- bzw. Kathoden-Ableiterbahnen seitlich aus dem Schichtstapel geführt sind. Weiter umfasst die Batteriezelle ein Gehäuse, welches den Schichtstapel mit den Anoden- bzw. Kathoden-Ableiterbahnen umschließt, und welches wenigstens an der ersten Stirnseite des Schichtstapels einen ersten Deckel mit einem innenseitigen Anoden-Stromsammler bzw. einem innenseitigen Kathoden-Stromsammler aufweist, wobei die Anoden-Ableiterbahnen bzw. die Kathoden-Ableiterbahnen jeweils büschelartig zusammengeführt sind, und jeweils am Anoden-Stromsammler bzw. am Kathoden-Stromsammler kontaktiert sind. Zudem umfasst die Batteriezelle wenigstens zwei Isolierlagen, welche mit einem ersten Ende jeweils an einer Oberseite bzw. einer Unterseite des Schichtstapels befestigt sind, wobei die Isolierlagen den Schichtstapel mit und ihren freien, zweiten Enden jeweils überragen und dabei diese zweiten Enden, unter Ausbildung von zueinander verlaufenden Faltungen, zueinander hin ausgerichtet sind, sodass die Büschel der Anoden-Ableiterbahnen bzw. der Kathoden-Ableiterbahnen jeweils zwischen den beiden Faltungen durchgeführt sind, und wobei die Isolierlagen durch eine Federwirkung ihrer jeweiligen Faltungen gegen einen Druck, welcher mittelbar durch den ersten Deckel ausgeübt wird, in Position gehalten sind. Vorteilhafte und teils für sich gesehen erfinderische Aufgaben sind Gegenstand der Unteransprüche und der nachfolgenden Beschreibung.

Die zweitgenannte Aufgabe wird erfindungsgemäß gelöst durch ein Verfahren zur Herstellung einer Batteriezelle, wobei eine Mehrzahl an Anodenschichten und eine Mehrzahl an Kathodenschichten alternierend zu einem Schichtstapel gestapelt wird, und dabei zwischen jeder Anodenschicht und jeder Kathodenschicht eine Separatorschicht angeordnet wird, und wobei wenigstens von einigen der Anodenschichten und von einigen der Kathodenschichten jeweils Anoden-Ableiterbahnen bzw. Kathoden-Ableiterbahnen seitlich aus dem Schichtstapel geführt und büschelartig zusammengeführt werden, und mit einem Anoden-Stromsammler bzw. einem Kathoden-Stromsammler eines oder jeweils Deckels für ein Gehäuse der Batteriezelle kontaktiert werden.

Verfahrensgemäß ist hierbei vorgesehen, dass an einer Oberseite bzw. einer Unterseite des Schichtstapels jeweils wenigstens eine Isolierlage derart befestigt wird, dass der Schichtstapel von der Isolierlage überragt wird, dass die freien Enden der besagten Isolierlagen jeweils unter Ausbildung einer Faltung von oben bzw. von unten zu den Büscheln der Anoden-Ableiterbahnen bzw. der Kathoden-Ableiterbahnen hin geführt werden, dass der Deckel bzw. der jeweilige Deckel zum Schichtstapel hin angedrückt wird, sodass auf die freien Enden der besagten Isolierlagen jenseits der jeweiligen Faltung ein Druck ausgeübt wird, und der Schichtstapel mit dem angedrücktem Deckel befestigt wird, und dabei oder danach im Gehäuse eingeschlossen wird.

Das erfindungsgemäße Verfahren zur Herstellung einer Batteriezelle teilt die Vorzüge der erfindungsgemäßen Batteriezelle. Die für die Batteriezelle und ihre Weiterbildungen angegebenen Vorteile können, mutatis mutandis, sinngemäß auf das Verfahren übertragen werden, und vice versa.

Die Batteriezelle ist bevorzugt gegeben durch eine Lithium(Li)-Ionen-Batteriezelle. Die Anodenund die Kathodenschichten (folgend gemeinsam auch als Elektrodenschichten bezeichnet), sind hierbei bevorzugt durch eine Beschichtung eines jeweiligen insbesondere folienartigen Substrats mit einem aktiven Material gegeben. Für die Anodenschichten wird bevorzugt eine Kupfer-Substratfolie genommen, als aktives Material ist hierbei bevorzugt eine Beschichtung aus Graphit oder Silizium (Si) bzw. einem Siliziumoxid (SiOx) aufgetragen. Zur Herstellung der Kathodenschichten K wird bevorzugt eine Aluminium-Substratfolie verwendet, als aktives Material ist hierbei bevorzugt eine Beschichtung aus Lithiumeisenphosphat (LFP) oder aus einem bzw. mehreren Lithium-Nickel-Mangan-Cobalt-Oxide (Li-NMC) aufgetragen. Die Separatorschichten können insbesondere jeweils durch eine keramikbeschichtete Kunststofffolie gegeben sein.

Unter einer alternierenden Anordnung der Anodenschichten und der Kathodenschichten im Schichtstapel (mit den jeweils dazwischen angeordneten Separatorschichten) ist hierbei insbesondere zu verstehen, dass der Schichtstapel aus einer Mehrzahl (bevorzugt einer Vielzahl) an Elementarzellen aufgebaut ist, welche jeweils eine Anodenschicht, eine Separatorschicht und eine Kathodenschicht aufweist. Insbesondere können hierbei die Substratfolien für die Anodenund Kathodenschichten auch beidseitig mit dem zugehörigen aktiven Material beschichtet sein, sodass in diesem Fall die wechselnden Abfolgen von Anodenschichten und Kathodenschichten an den jeweiligen Substratfolien gespiegelt sind (also bspw. auf eine Abfolge von Anodenschicht - Separatorschicht - Kathodenschicht als Elementarzelle zunächst die Aluminium-Substratfolie der Kathodenschicht folgt, und anschließend eine Elementarzelle der Abfolge Kathodenschicht - Separatorschicht - Anodenschicht, mit entsprechend anschließender Kupfer-Substratfolie, und eine periodische Wiederholung der genannten Reihenfolge den Schichtstapel bildet).

Aus dem Schichtstapel sind, an einer ersten Stirnseite, zumindest von einigen der Anodenschichten, bevorzugt von allen Anodenschichten Anoden-Ableiterbahnen herausgeführt, und dabei zu einem Büschel zusammengeführt. Die Anoden-Ableiterbahnen können hierbei insbesondere direkt aus dem jeweiligen unbeschichteten Substrat (also der Kupfer-Substratfolie) ausgebildet werden. Vergleichbares gilt bevorzugt für die Kathoden-Ableiterbahnen (wobei entsprechend Aluminium-Substratfolie verwendet wird). Die genannten Büschel der Anoden- und Kathoden-Ableiterbahnen, welche entweder von derselben (ersten) Stirnseite des Schichtstapels nebeneinander (bzw. an entgegengesetzten Rändern der Stirnseite) oder von zwei gegenüberliegenden Stirnseiten (der ersten und der zweiten Stirnseite) wegführen, sind mit einem entsprechenden Anoden- bzw. Kathoden-Stromsammler elektronisch kontaktiert, welche beide jeweils an einer Innenseite eines (ersten) Deckels für ein Gehäuse der Batteriezelle oder eines jeweiligen (ersten und zweiten) Deckels für das Gehäuse angeordnet sind. Das Kontaktieren kann hierbei insbesondere im Herstellungsverfahren durch einen Schweißprozess erfolgen. Insbesondere kann der Deckel hierfür zunächst um 90° gegenüber seiner vorgesehenen Position im fertigen Gehäuse verkippt bzw. verdreht sein, und erst für ein Andrücken in seine eigentliche Position gebracht werden.

Insbesondere können für den Fall, dass die Anoden- und Kathoden-Ableiterbahnen an jeweils entgegengesetzten Stirnseiten (der ersten bzw. zweiten Stirnseite) aus dem Schichtstapel geführt sind, auch nur die Anoden-Ableiterbahnen oder nur die Kathoden-Ableiterbahnen in der beschriebenen Weise durch zwei bei der betreffenden Stirnseite des Schichtstapels an dessen Ober- bzw. Unterseite befestigten Isolierlagen durchgeführt sein, während die jeweils anderen Ableiterbahnen an der anderen Stirnseite auf andere Weise (also insbesondere ohne die beschriebenen Faltungen zweiter Isolierlagen) gegen das Gehäuse isoliert sind. In einer alternativen Ausgestaltung können jedoch auch im besagten Fall, dass die Anoden- und Kathoden-Ableiterbahnen an jeweils entgegengesetzten Stirnseiten (der ersten bzw. zweiten Stirnseite) aus dem Schichtstapel geführt sind, im Bereich beider Stirnseiten jeweils zwei Isolierlagen an der Ober- bzw. Unterseite angebracht sein, und entsprechend die Kathoden- und die Anoden-Ableiterbahnen auf ihrer betreffenden Seite durch die sich dort jeweils ausbildenden Faltungen der Isolierlagen zum zugehörigen Stromsammler im ersten bzw. zweiten Deckel geführt sein.

An der Außenseite des ersten Deckels ist hierbei ein Anoden-Terminal und/oder ein Kathoden-Terminal angeordnet, welches durch den ersten Deckel hindurch mit dem zugehörigen Anoden-Stromsammler bzw. Kathoden-Stromsammler elektrisch kontaktiert ist, sodass die Batterieleistung der Batteriezelle von außen über die entsprechenden Terminals abgegriffen werden kann.

An der Oberseite und der Unterseite des Schichtstapels, welche jeweils gegeben sind durch einen Anfang bzw. ein Ende der Schichtung der Elektrodenschichten, ist jeweils eine Isolierlage derart befestigt, dass ein erstes Ende der jeweiligen Isolierlage an der Ober- bzw. Unterseite des Schichtstapels befestigt ist, und ein freies, zweites Ende der betreffenden Isolierlage den Schichtstapel bevorzugt an besagter Stirnseite überragt. Die besagten freien Enden der Isolierlagen folgen dabei zunächst dem Verlauf der Büschel der Anoden- bzw. Kathoden-Ableiterbahnen. Hierbei sind die Isolierlagen um die zusammengeführten, sich verjüngenden Büschel herum geführt, und bilden an ihrem jeweiligen freien (zweiten) Ende jeweils eine Faltung aus. Dies bedeutet insbesondere, dass die an der Oberseite des Schichtstapels (mit ihrem ersten Ende) befestigte Isolierlage mit ihrem freien (zweiten) Ende zunächst zu einer Mittenebene des Schichtstapels (in Stapelrichtung) hin ausgerichtet ist, und die Anoden-Ableiterbahnen zwischen der Stirnseite des Schichtstapels und der genannten Isolierlage geführt sind. bevorzugt im Bereich der Mittelebene bildet diese Isolierlage nun an ihrem freien Ende eine Faltung derart aus, dass das freie Ende wieder von der Mittelebene weg ausgerichtet ist. Eine ähnliche Ausgestaltung (jedoch unter symmetrischer Vertauschung der Bezüge von Oben und Unten) bildet die an der Unterseite des Schichtstapels befestigte Isolierlage.

Es liegen somit zwei insbesondere im Bereich der Mittelebene positionierte, gegensätzlich ausgerichtete und zueinander zeigende Faltungen der beiden Isolierlagen vor. Durch diese beiden Faltungen sind die Büschel der Anoden- und Kathoden-Ableiterbahnen geführt. Indem nun der erste Deckel in der fertigen Batteriezelle gegen die Stirnseite des Schichtstapels gedrückt ist, können die Isolierlagen infolge ihrer jeweiligen Faltung und einer gegen den Druck des Deckels zumindest mittelbar entstehenden Federwirkung (z.B. gegen den ersten Deckel selbst, oder gegen die besagten Anoden- bzw. Kathoden-Ableiterbahnen im Bereich des ersten Deckels) nicht aus der genannten Positionierung zurückziehen oder zurückgleiten, sondern bleiben insbesondere mit den Faltungen nah an den genannten Büscheln. Hierdurch können die besagten Anoden- bzw. Kathoden-Ableiterbahnen im Bereich der Stirnseite des Schichtstapels bzw. des ersten Deckels gegen das Gehäuse isoliert werden. Die Isolierlagen sind hierfür bevorzugt aus einem isolierenden Material geeigneter Festigkeit gefertigt.

Im Herstellungsverfahren wird hierbei bevorzugt vor dem endgültigen Verschluss des Gehäuses ein Elektrolyt in die Batteriezelle injiziert (etwa durch eine hierfür vorgesehene, danach zu verschließende Injektionsöffnung im ersten Deckel) oder in sonstiger Weise hinzugefügt. Insbesondere kann dabei im Herstellungsverfahren die Kontaktierung der Anoden- bzw. Kathoden-Ableiterbahnen am zugehörigen Stromsammler des ersten Deckels auch nach dem Anbringen der Isolierlagen am Schichtstapel sowie auch noch nach dem Ausformen ihrer jeweiligen Faltungen erfolgen.

In einer vorteilhaften Ausgestaltung weist wobei das Gehäuse an der ersten Stirnseite des Schichtstapels den ersten Deckel mit dem innenseitigen Anoden-Stromsammler auf, an welchem die zwischen besagten Faltungen besagter zwei Isolierlagen durchgeführten Anoden-Ableiterbahnen kontaktiert sind. Das Gehäuse weist zudem an einer der ersten Stirnseite gegenüberliegenden zweiten Stirnseite des Schichtstapels einen zweiten Deckel mit dem innenseitigen Kathoden-Stromsammler auf, an welchem die zwischen Faltungen von weiteren zwei Isolierlagen durchgeführten Kathoden-Ableiterbahnen kontaktiert sind, welche an der zweiten Stirnseite seitlich aus dem Schichtstapel geführt sind. Dies bedeutet insbesondere, dass die Batteriezelle das Anoden-Terminal und das Kathoden-Terminal jeweils an zwei gegenüberliegenden Stirnseiten aufweist. Die Kontaktierung der besagten Terminals, und somit der zugehörigen Stromsammler, mit den zugehörigen Anoden- bzw. Kathoden-Ableiterbahnen der jeweiligen Anoden- bzw. Kathodenschichten erfolgt jeweils unter der beschriebenen Durchführung durch je zwei zueinander gerichtete Faltungen je zweier Isolierlagen.

Dies bedeutet: An der ersten Stirnseite des Schichtstapels sind die Anoden-Ableiterbahnen durch zwei dort befestigte Isolierlagen (und die von diesen dort infolge des Drucks durch den ersten Deckel ausgebildeten Faltungen) zum Anoden-Stromsammler geführt. An der zweiten Stirnseite des Schichtstapels sind die Kathoden-Ableiterbahnen durch zwei dort befestigte Isolierlagen (und die von diesen dort infolge des Drucks durch den zweiten Deckel ausgebildeten Faltungen) zum Kathoden-Stromsammler geführt.

Bevorzugt können bei der Herstellung einer solchen Batteriezelle zunächst die an der ersten Stirnseite aus dem Schichtstapel geführten Anoden-Ableiterbahnen büschelartig zusammengeführt werden und mit dem zugehörigen Anoden-Stromsammler des ersten Deckels kontaktiert werden, wobei der erste Deckel zum Schichtstapel hin angedrückt wird, sodass insbesondere an den zugehörigen zwei Isolierlagen auf die beiden Faltungen sich ausbildenden ein Druck ausgeübt wird, und der Schichtstapel mit dem angedrücktem Deckel befestigt wird, wobei anschließend (bevorzugt nach einem Einführen des Verbundes aus Schichtstapel und Anodenseitigem Deckel in das Gehäuse) die aus einer der ersten Stirnseite gegenüberliegenden zweiten Stirnseite aus dem Schichtstapel geführten Kathoden-Ableiterbahnen büschelartig zusammengeführt werden und mit dem Kathoden-Stromsammler kontaktiert werden, welcher in einem zweiten Deckel für das Gehäuse angeordnet ist, wobei der zweite Deckel zum Schichtstapel hin angedrückt wird, sodass auf die freien Enden der zugehörigen Isolierlagen jenseits ihrer jeweiligen Faltung ein Druck ausgeübt wird, und wobei der Schichtstapel mit dem befestigten ersten Deckel und dem angedrückten zweiten Deckel im Gehäuse eingeschlossen wird. Die Befestigung des ersten Deckels am Schichtstapel kann hierbei etwa durch eine Schutzfolie, eine Schutzhülle o.ä. erfolgen.

Insbesondere können von der Reihenfolge her zuerst auch die Kathoden-Ableiterbahnen am Kathoden-Stromsammler im zugehörigen Deckel kontaktiert werden, und besagter Deckel (unter Ausübung eines Drucks auf die freien Enden der zugehörigen Isolierlagen, zwischen deren Faltungen die Kathoden-Ableiterbahnen durchgeführt sind) gegen den Schichtstapel gedrückt und dort befestigt werden, und danach die Anoden-Ableiterbahnen am Anoden-Stromsammler im zugehörigen anderen Deckel kontaktiert werden, und besagter Deckel (unter Ausübung eines Drucks auf die freien Enden der zugehörigen Isolierlagen, zwischen deren Faltungen die Anoden-Ableiterbahnen durchgeführt sind) gegen den Schichtstapel gedrückt und dort befestigt bzw. im Gehäuse eingeschlossen werden.

In einer ebenfalls vorteilhaften, alternativen Ausgestaltung sind die Anoden-Ableiterbahnen und die Kathoden-Ableiterbahnen an der ersten Stirnseite des Schichtstapels, zum Verlauf der Anoden- bzw. Kathodenschichten parallel zueinander versetzt, seitlich aus dem Schichtstapel geführt, wobei der erste Deckel den Anoden-Stromsammler und den Kathoden-Stromsammler aufweist, an welchen jeweils die Anoden-Ableiterbahnen und die Kathoden-Ableiterbahnen unter Durchführung durch die Faltungen der besagten Isolierlagen kontaktiert sind. In dieser Ausgestaltung sind somit beide Terminals, das Anoden- und das Kathoden-Terminal, zum äußeren Abgreifen der Batterieleistung an derselben Stirnseite im ersten Deckel angeordnet. Entsprechend sind die Anoden- und Kathoden-Ableiterbahnen an derselben Stirnseite aus dem Schichtstapel geführt, an welcher an der Ober- und Unterseite jeweils die Isolierlagen befestigt sind, durch deren Faltungen die Anoden- und Kathoden-Ableiterbahnen zu ihren zugehörigen Stromsammlern geführt sind.

Bevorzugt bildet in der Batteriezelle ein Büschel der Anoden-Ableiterbahnen und/oder ein Büschel der Kathoden-Ableiterbahnen zwischen dem Schichtstapel und dem ersten Deckel bzw. dem zweiten Deckel wenigstens eine Schlaufe aus, wobei wenigstens eine der beiden Isolierlagen mit ihrer Faltung in der Schlaufe geführt ist. Dies bedeutet insbesondere, dass die besagten Büschel in einer Seitenansicht des Schichtstapels (bezogen auf die Richtung der Stapelung) bevorzugt einfach U-förmig oder auch zweifach U-förmig gewunden sind (insbesondere unter jeweiligem vollständigen Überqueren der oben beschriebenen Mittelebene des Schichtstapels). Die besagte Schlaufe wird hierbei insbesondere ausgebildet, indem die Anoden- bzw. Kathoden- Ableiterbahnen bei der und für die Kontaktierung mit den zugehörigen Stromsammlern im Deckel einen gewissen Längenüberschuss aufweisen, sodass sich die besagte(n) U-förmige(n) Windung(en) bei Andrücken des ersten (bzw. zweiten) Deckels zum Schichtstapel hin ausbildet (ausbilden). In die besagte U-förmige Windung ist dann wenigstens eine der beiden Isolierlagen derart geführt, dass bevorzugt die betreffende Faltung im Bereich des inneren Scheitelpunktes der U-förmigen Wendung positioniert ist.

Insbesondere wird hierfür im Herstellungsverfahren wenigstens eine der besagten Isolierlagen, bevorzugt jeweils beide Isolierlagen derselben Seite, durch einen zugehörigen Niederhalter von oben bzw. von unten zu den Büscheln hin geführt wird, wobei der betreffende Niederhalter (bzw. beide Niederhalte) während oder nach dem Andrücken des zugehörigen Deckels entfernt wird. Der Niederhalter führt somit die jeweilige Isolierlage hin zu den Büscheln, und drückt die Isolierlage zur Mittelebene des Schichtstapels hin um die Büschel herum, wobei sich insbesondere die Faltung der Isolierlage auch durch den Druck der Niederhalter auf die Isolierlage (z.B. von oben) und einen durch die Büschel an Anoden- bzw. Kathoden-Ableiterbahnen (z.B. von unten) jenseits des Niederhalters ausgeübten Gegendruck auf die Isolierlage ausbilden kann. Durch den vom zugehörigen Deckel ausgeübten bzw. durch die Büschel auf die Isolierlagen und insbesondere auf deren Faltungen übertragenen Druck bleibt die jeweilige Faltung auch nach Entfernen des Niederhalters in ihrer Position, insbesondere im Bereich des inneren Scheitelpunktes der U-förmigen Wendung der beschriebenen Schlaufe.

Vorteilhafterweise ist auf dem durch die Anoden-Ableiterbahnen gebildeten Büschel und/oder auf dem durch die Kathoden-Ableiterbahnen gebildeten Büschel im Bereich des Anoden-Stromsammlers bzw. des Kathoden-Stromsammlers wenigstens eine Zusatz-Isolierlage angebracht.

Günstigerweise sind die Isolierlagen jeweils aus einem Polyolefin wie Polypropylen (PP) oder Polyethylen (PE) und/oder einem Polyimid gefertigt. Diese isolierenden Materialien weisen besonders vorteilhafte Eigenschaften hinsichtlich ihrer Formbarkeit der Faltungen auf.

Der Schichtstapel ist bevorzugt wenigstens an der Ober- und Unterseite in eine Schutzfolie eingepackt, auf welcher die Isolierlagen jeweils an ihrem ersten Ende befestigt sind. Die Schutzfolie verhindert hierbei, dass in der fertigen Batteriezelle der Schichtstapel mit freiem aktivem Material das Gehäuse berührt, und dient somit auch der elektrischen Isolierung. Die Schutzfolie kann insbesondere aus PP gefertigt sein. Alternativ dazu oder auch zusätzlich kann der Schichtstapel an der Ober- und der Unterseite jeweils mit einer Separatorschicht abschließen.

Vorteilhafterweise sind die Isolierlagen jeweils an ihrem ersten Ende zur Befestigung mit dem Schichtstapel verklebt, insbesondere mittels eines klebenden, bevorzugt selbstklebenden Streifens. Der besagte klebende, bevorzugt selbstklebende Streifen überdeckt bevorzugt nur den Bereich, in welchem die betreffende Isolierlage am Schichtstapel zu befestigen ist, und lässt insbesondere den Bereich, welcher den Schichtstapel überragen soll, ausgespart.

Zweckmäßigerweise können die besagten Isolierlagen auch in einem Heißpress-Schritt oben bzw. unten am Schichtstapel befestigt werden. Ein solcher Heißpress-Schritt ("hot press") wird in der Herstellung von Batteriezellen oftmals angewandt, um die einzelnen Elektrodenschichten des den Schichtstapels kompakt mit den Separatorschichten zu fügen. Im Rahmen dieses Heißpress-Schrittes lassen sich auch die Isolierlagen am Schichtstapel befestigen. In diesem Fall kann insbesondere auf o.g. klebenden Streifen verzichtet werden.

Nachfolgend wird ein Ausführungsbeispiel der Erfindung anhand von Zeichnungen näher erläutert. Hierbei zeigt schematisch:

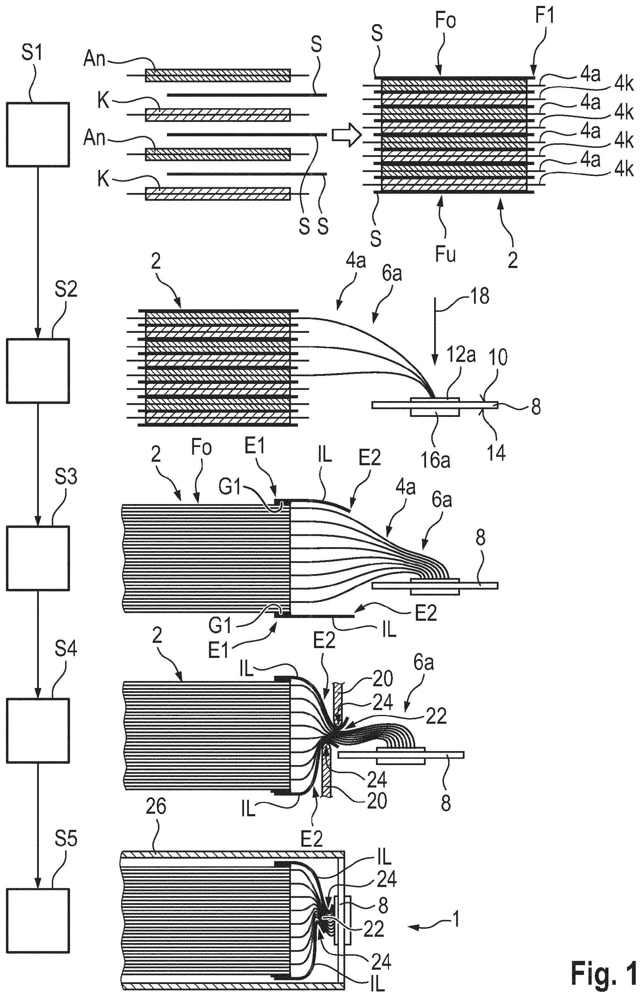

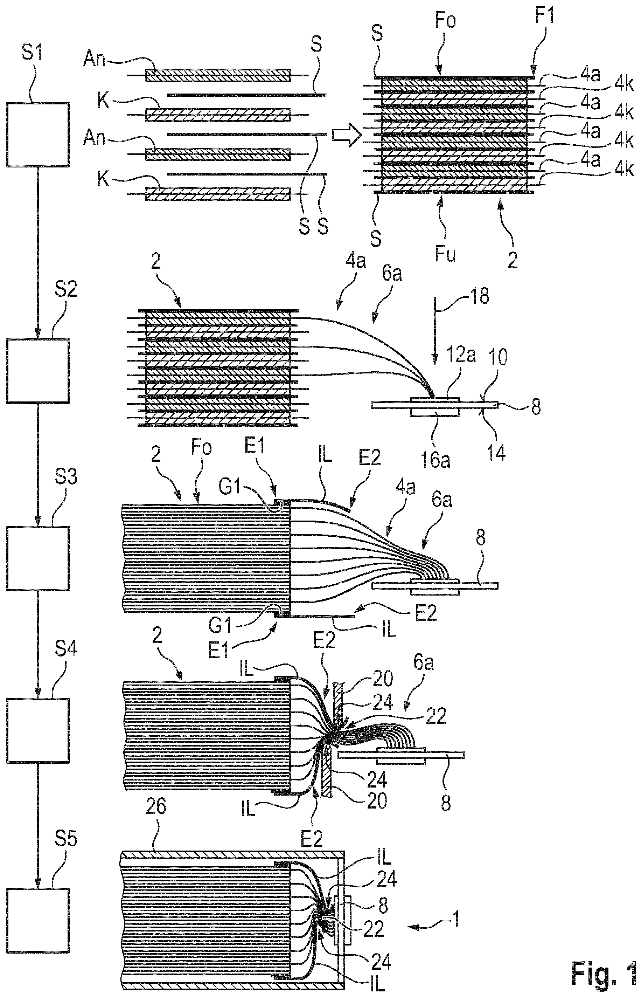

- Fig. 1: anhand einer Folge an Querschnittdarstellungen ein Verfahren zur Herstellung einer Batteriezelle mit einer Elektrodenableiter-Isolierung.

In Figur 1 ist schematisch ein Verfahren zur Herstellung einer Batteriezelle 1 anhand einer Abfolge an Querschnittdarstellungen der besagten Batteriezelle 1 während der Fertigung gezeigt. Die Batteriezelle 1 ist hierbei gegeben durch eine Li-lonen-Batteriezelle.

In einem ersten Verfahrensschritt S1 werden eine Mehrzahl an Anodenschichten An und eine entsprechende Mehrzahl an Kathodenschichten K als Elektrodenschichten bereitgestellt. Die Anodenschichten An und die Kathodenschichten K werden zusammen mit Separatorschichten S alternierend derart zu einem Schichtstapel 2 gestapelt, dass zwischen einer Anodenschicht An und einer Kathodenschicht K immer eine Separatorschicht S folgt.

Die Anodenschichten An können beispielsweise hergestellt werden, indem auf eine Kupfer-Substratfolie eine aus Graphit oder Si bzw. SiOx aufgetragen wird. Diese Beschichtung bildet im Betrieb der fertigen Batteriezelle 1 das aktive Material der Anodenschicht An. Zur Herstellung der Kathodenschichten K wird bevorzugt eine Aluminium-Substratfolie mit einer Beschichtung aus LFP oder aus Li-NMC versehen, wobei besagte Beschichtung im Betrieb der fertigen Batteriezelle 1 das aktive Material der Kathodenschicht K bildet. Die Beschichtungen können insbesondere jeweils beidseitig auf die zugehörigen Substratfolien für die Anodenschichten An bzw. die Kathodenschichten K aufgetragen werden.

Die Separatorschichten S können insbesondere jeweils durch eine keramikbeschichtete Kunststofffolie gegeben sein. Die Separatorschichten S werden beim Erzeugen des Schichtstapels 2 jeweils zwischen die Anodenschichten An und die Kathodenschichten K gelegt. Der Schichtstapel 2, welcher eine im Wesentlichen quaderförmige Geometrie aufweist, wird hierbei an einer Oberseite Fo und an einer Unterseite Fu bevorzugt jeweils von einer Separatorschicht S abgeschlossen. Alternativ dazu oder auch zusätzlich kann auf den Schichtstapel 2 wenigstens an der besagten Ober- bzw. Unterseite Fo, Fu noch in eine Schutzfolie (nicht dargestellt) aufgetragen werden, welche etwa aus PP gefertigt sein kann. Der Abschluss des Schichtstapels S an der Ober- bzw. Unterseite Fo, Fu durch eine Separatorschicht S bzw. durch eine Schutzfolie verhindert, dass der Schichtstapel 2 mit einem aktiven Material einer der Elektrodenschichten An, K das Gehäuse der fertigen Batteriezelle 1 berührt. Der Schichtstapel 2 kann zudem noch einem Heißpressen unterzogen werden, um die Separatorschichten S mit den angrenzenden Anoden- bzw. Kathodenschichten K kompakter zu fügen. Das Heißpressen erfolgt hierbei bevorzugt unter einer Temperatur von 60°C bis 90°C, besonders bevorzugt von 70°C bis 80°C.

Aus dem Schichtstapel 2 sind in der in Figur 1 dargestellten Ausführungsform an einer Stirnseite F1 einzelne Anoden-Ableiterbahnen 4a der Anodenschichten An und Kathoden-Ableiterbahnen 4k der Kathodenschichten K herausgeführt. Die Anoden- bzw. Kathoden-Ableiterbahnen 4a, 4k sind dabei jeweils seitlich zueinander bzgl. der Bildebene versetzt, d.h., die Anoden-Ableiterbahnen 4a sind bezüglich der Bildebene weiter vorne (oder weiter hinten) seitlich aus dem Schichtstapel geführt als die Kathoden-Ableiterbahnen 4k. Die Anoden- bzw. Kathoden-Ableiterbahnen 4a, 4k können hierbei direkt aus dem jeweiligen unbeschichteten Substrat (also der Kupfer-Substratfolie der Anodenschicht bzw. der Aluminium-Substratfolie der Kathodenschicht) ausgebildet werden. In einem zweiten Verfahrensschritt S2 werden die Anoden-Ableiterbahnen 4a der Anodenschichten An zu einem Büschel 6a zusammengeführt. Dieses Büschel 6a der Anoden-Ableiterbahnen 4a wird nun an einem ersten Deckel 8 für ein Gehäuse der fertigen Batteriezelle 1 elektrisch kontaktiert. Hierfür ist an einer Innenseite 10 (bezüglich der späteren Positionierung des ersten Deckels 8 in der fertigen Batteriezelle 1 ein Anoden-Stromsammler 12a angeordnet, welcher mit einem auf einer Außenseite 14 des ersten Deckels 8 angeordneten Anoden-Terminal 16a durch den ersten Deckel 8 hindurch elektrisch verbunden ist. Am Anoden-Terminal 16a kann die fertige Batteriezelle 1 später für eine Verwendung in einem Batteriesystem von außen (elektrisch) angeschlossen werden.

Für besagte Kontaktierung der Anoden-Ableiterbahnen 4a am Anoden-Stromsammler 12a ist der erste Deckel 8 zunächst um 90° gegenüber seiner späteren Position in der fertigen Batteriezelle 1 gekippt, sodass der Anoden-Stromsammler 12a aus einer Richtung 18 senkrecht zur Stirnseite F1 (und parallel zur Stapelung im Schichtstapel 2) für das besagte Verschweißen der Anoden-Ableiterbahnen 4a zugänglich ist.

Für die Kathoden-Ableiterbahnen 4k der Kathodenschichten K, welche im Schritt S2 der Figur 2 hinter der Bildebene angeordnet und somit nicht gesondert dargestellt sind, gilt vergleichbares. Auch die Kathoden-Ableiterbahnen 4k werden zu Büscheln zusammengeführt, und an einem entsprechenden Kathoden-Stromsammler an der Innenseite 10 des ersten Deckels 8 elektrisch kontaktiert, welcher mit einem zugehörigen Kathoden-Terminal an der Außenseite 14 des ersten Deckels (zum Anschluss der fertigen Batteriezelle 1 in einem Batteriesystem) elektrisch verbunden ist. Die beschriebene Kontaktierung kann ggf. auch vor dem o.g. Heißpressen des Schichtstapels 2 erfolgen.

In einem dritten Verfahrensschritt S3 werden nun auf den Schichtstapel 2 an der Ober- bzw. Unterseite Fo, Fu jeweils Isolierlagen IL angebracht. Die Isolierlagen IL sind dabei bevorzugt aus einem Polyoelfin wie PP oder PE, oder aus einem Polyimid gefertigt. Eine Isolierlage IL wird hierbei mit ihrem ersten Ende E1 an der betreffenden Ober- bzw. Unterseite Fo, Fu des Schichtstapels 2 (auf der Separatorschicht S bzw. der Schutzfolie) befestigt, wofür die Isolierlage IL mit einer am ersten Ende E1 selbstklebenden Schicht G1 versehen sein kann. Alternativ dazu, oder auch zusätzlich, kann die jeweilige Isolierlage IL auch erst durch den oben beschriebenen Heißpress-Teilschritt (welcher hierfür erst beim Verfahrensschritt S3 durchgeführt wird), an der Ober- bzw. Unterseite Fo, Fu des Schichtstapels, also bevorzugt an der Kunststofffolie der Separatorschicht S bzw. der Polymer-Schutzfolie, befestigt werden. Die Isolierlagen IL weisen jeweils freie, zweiten Enden E2 auf, welche den Schichtstapel 2 überragen, und hierbei entlang der Anoden- bzw. Kathoden-Ableiterbahnen 4a, 4k geführt sind.

Diese freien, zweiten Enden E2 der Isolierlagen IL werden nun in einem vierten Verfahrensschritt S4 durch Niederhalter 20, welche in der Richtung 18 bzw. entgegen der Richtung 18 neben dem Schichtstapel 2 eingefahren werden, zum Büschel 6a der Anoden-Ableiterbahnen 4a bzw. zum entsprechenden Büschel der Kathoden-Ableiterbahnen 4k hingeführt. Das besagte Büschel 6a (für das in Figur 1 nicht sichtbare Büschel der Kathoden-Ableiterbahnen 4k gilt vergleichbares) bildet eine Schlaufe 22 aus, welche eine leichte Doppelwindung aufweist, und in welche von oben bzw. von unten die Isolierlagen IL durch den jeweiligen Niederhalter 20 eingedrückt werden, sodass die zweiten Enden E2 der Isolierlagen IL in dieser Schlaufe 22 jeweils eine Faltung 24 ausbilden. Die Niederhalter 20 können dabei leicht versetzt zueinander eingefahren werden, sodass die Isolierlagen IL der Schlaufe 22, welche sich im Büschel 6a ausbildet, jeweils von oben bzw. von unten besser anpassen können.

In einem fünften Verfahrensschritt S5 wird nun der erste Deckel 8 um 90° in seine vorgesehene Position gekippt, und der Schichtstapel in einem Gehäuse 26 eingeschlossen. Hierfür werden die Niederhalter 20 wieder aus der Schlaufe 22 des Büschels 6a an Anoden-Ableiterbahnen 4a (bzw. des entsprechenden Büschels der Kathoden-Ableiterbahnen 4k) entfernt, sodass der erste Deckel auf dem Gehäuse 26 (etwa durch Schweißen) befestigt werden kann. Vor besagter Befestigung des ersten Deckels 8 kann noch ein Elektrolyt in das Gehäuse 26 injiziert werden. besagte Injektion kann auch nach der Befestigung des ersten Deckels 8 durch eine entsprechende, danach zu verschließende Injektionsöffnung im ersten Deckel 8 erfolgen. Hierdurch ist die Batteriezelle 1 nach dem endgültigen Verschluss fertig hergestellt.

Durch die Faltung 24 ihres freien zweiten Endes E2 bleibt eine Isolierlage IL durch den Druck, welcher hierbei von den gebogenen Anoden- bzw. Kathoden-Ableiterbahnen vom ersten Deckel aus mittelbar über die Schlaufe 22 ausgeübt wird, in der Schlaufe 22 in Position, auch wenn die Niederhalter 20 entfernt werden. Maßgeblich ist dann nur die gekippte und zur Stirnseite F1 hin verlagerte Position des ersten Deckels 8. Die Schlaufe 22 wird dadurch eng genug, dass über die Faltung 24 ein Zurückziehen oder Herausgleiten des freien zweiten Endes E2 der der Isolierlage IL verhindert werden kann.

In einer alternativen Variante sind an der ersten Stirnseite F1 des Schichtstapels lediglich die Anoden-Ableiterbahnen 4a geführt, während die Kathoden-Ableiterbahnen 4k an einer der ersten Stirnseite F1 gegenüberliegenden, zweiten Stirnseite (nicht dargestellt) aus dem Schichtstapel 2 geführt sind. Die Befestigung der Anoden-Ableiterbahnen 4a unter Durchführung zwischen den Isolierlagen IL am Anoden-Stromsammler 12a des ersten Deckels 8 erfolgt wie in den Schritten S2 bis S4 beschrieben. Der erste Deckel 8 wird anschließend gegen den Schichtstapel 2 gedrückt, und an diesem befestigt (z.B. mittel seiner Schutzfolie). Anschließend werden die Schritte S2 bis S4 für die Befestigung der Kathoden-Ableiterbahnen 4k am zugehörigen Kathoden-Stromsammler eines zweiten Deckels (nicht dargestellt) wiederholt, und hierbei die Kathoden-Ableiterbahnen 4k zwischen sich ausbildenden Faltungen von an im Bereich der zweiten Stirnseite am Schichtstapel 2 befestigten Isolierlagen (nicht dargestellt) durchgeführt. Abschließend wird der zweite Deckel gegen den Schichtstapel 2 gedrückt, und dieser im Gehäuse eingeschlossen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden.

### Bezugszeichenliste

- 1: Batteriezelle
- 2: Schichtstapel
- 4a/k: Anoden-/Kathoden-Ableiterbahnen
- 6a: Büschel (der Anoden-Ableiterbahnen)
- 8: Deckel
- 10: Innenseite (des Deckels)
- 12a: Anoden-Stromsammler
- 14: Außenseite des Deckels
- 16a: Anoden-Terminal
- 18: Richtung (senkrecht zur Stirnseite)
- 20: Niederhalter
- 22: Schlaufe
- 24: Faltung
- 26: Gehäuse

- An: Anodenschicht
- E1/2: erstes/zweites Ende (der Isolierlage)
- F1: Stirnseite (des Schichtstapels)
- Fo/u: Ober- bzw. Unterseite (des Schichtstapels)
- G1: selbstklebende Schicht
- K: Kathodenschicht
- IL: Isolierlage
- S: Separatorschicht
- S1-S5: Verfahrensschritte

## Patentansprüche

1. Batteriezelle (1), umfassend:
- einen Schichtstapel (2), welcher eine Mehrzahl an Anodenschichten (An) und eine entsprechende Mehrzahl an Kathodenschichten (K) aufweist,
- wobei die Anodenschichten (An) und die Kathodenschichten (K) alternierend aufeinander gestapelt sind, und zwischen jeder Anodenschicht (An) und jeder Kathodenschicht (K) jeweils eine Separatorschicht (S) angeordnet ist, und
- wobei wenigstens an einer ersten Stirnseite (F1) des Schichtstapels (2) zumindest von einigen der Anodenschichten (An) und/oder einigen der Kathodenschichten (K) Anoden- bzw. Kathoden-Ableiterbahnen (4a, 4k) seitlich aus dem Schichtstapel (2) geführt sind,
- ein Gehäuse (26), welches den Schichtstapel (2) mit den Anoden- bzw. Kathoden-Ableiterbahnen (4a, 4k) umschließt, und welches wenigstens an der ersten Stirnseite (F1) des Schichtstapels (2) einen ersten Deckel (8) mit einem innenseitigen Anoden-Stromsammler (12a) bzw. einem innenseitigen Kathoden-Stromsammler aufweist,
- wobei die Anoden-Ableiterbahnen (4a) bzw. die Kathoden-Ableiterbahnen (4k) jeweils büschelartig zusammengeführt sind, und jeweils am Anoden-Stromsammler (12a) bzw. am Kathoden-Stromsammler kontaktiert sind, und
- wenigstens zwei Isolierlagen (IL), welche mit einem ersten Ende (E1) jeweils an einer Oberseite (Fo) bzw. einer Unterseite (Fu) des Schichtstapels (2) befestigt sind,
- wobei die Isolierlagen (IL ) den Schichtstapel (2) mit ihren freien, zweiten Enden (E2) jeweils überragen und dabei diese zweiten Enden (E2), unter Ausbildung von zueinander verlaufenden Faltungen (24), zueinander hin ausgerichtet sind, sodass die Büschel (6a) der Anoden-Ableiterbahnen (4a) bzw. der Kathoden-Ableiterbahnen jeweils zwischen den beiden Faltungen (24) durchgeführt sind, und
- wobei die Isolierlagen (IL) durch eine Federwirkung ihrer jeweiligen Faltungen (24) gegen einen Druck, welcher mittelbar durch den ersten Deckel (8) ausgeübt wird, in Position gehalten sind.

2. Batteriezelle (1) nach Anspruch 1,
wobei das Gehäuse (26)
- an der ersten Stirnseite (F1) des Schichtstapels (2) den ersten Deckel mit dem innenseitigen Anoden-Stromsammler (12a) aufweist, an welchem die zwischen besagten Faltungen (24) besagter zwei Isolierlagen (IL) durchgeführten Anoden-Ableiterbahnen (4a) kontaktiert sind, und
- an einer der ersten Stirnseite (F1) gegenüberliegenden zweiten Stirnseite des Schichtstapels (2) einen zweiten Deckel mit dem innenseitigen Kathoden-Stromsammler (12k) aufweist, an welchem die zwischen Faltungen von weiteren zwei Isolierlagen (IL) durchgeführten Kathoden-Ableiterbahnen (4k) kontaktiert sind, welche an der zweiten Stirnseite seitlich aus dem Schichtstapel (2) geführt sind.

3. Batteriezelle (1) nach Anspruch 1,
wobei die Anoden-Ableiterbahnen (4a) und die Kathoden-Ableiterbahnen (4k) an der ersten Stirnseite (F1) des Schichtstapels (2), zum Verlauf der Anoden- bzw. Kathodenschichten parallel zueinander versetzt, seitlich aus dem Schichtstapel (2) geführt sind,
wobei der erste Deckel (8) den Anoden-Stromsammler (12a) und den Kathoden-Stromsammler aufweist, an welchen jeweils die Anoden-Ableiterbahnen (4a) und die Kathoden-Ableiterbahnen (4k) unter Durchführung durch die Faltungen (24) der besagten zwei Isolierlagen (IL) kontaktiert sind.

4. Batteriezelle (1) nach Anspruch 1 oder Anspruch 2,
wobei ein Büschel (6a) der Anoden-Ableiterbahnen (4a) und/oder ein Büschel der Kathoden-Ableiterbahnen (4k) zwischen dem Schichtstapel (2) und dem ersten Deckel (8) bzw. dem zweiten Deckel wenigstens eine Schlaufe (22) ausbildet, und
wobei wenigstens eine der beiden Isolierlagen (IL) mit ihrer Faltung (24) in der Schlaufe (22) geführt ist.

5. Batteriezelle (1) nach Anspruch 4,
wobei auf dem durch die Anoden-Ableiterbahnen (4a) gebildeten Büschel (6a) und/oder auf dem durch die Kathoden-Ableiterbahnen (4k) gebildeten Büschel im Bereich des Anoden-Stromsammlers (12a) bzw. des Kathoden-Stromsammlers wenigstens eine Zusatz-Isolierlage angebracht ist.

6. Batteriezelle (1) nach einem der vorhergehenden Ansprüche,
wobei die Isolierlagen (IL) jeweils aus einem Polyolefin und/oder einem Polyimid gefertigt sind.

7. Verfahren zur Herstellung einer Batteriezelle (1),
- wobei eine Mehrzahl an Anodenschichten (An) und eine entsprechende Mehrzahl an Kathodenschichten (K) alternierend zu einem Schichtstapel (2) gestapelt wird, und dabei zwischen jeder Anodenschicht (An) und jeder Kathodenschicht (K) eine Separatorschicht (S) angeordnet wird,
- wobei wenigstens von einigen der Anodenschichten (An) und von einigen der Kathodenschichten (K) jeweils Anoden-Ableiterbahnen (4a) bzw. Kathoden-Ableiterbahnen (4k) seitlich aus dem Schichtstapel (2) geführt und büschelartig zusammengeführt werden, und mit einem Anoden-Stromsammler (12a) bzw. einem Kathoden-Stromsammler eines Deckels (8) oder jeweils eines Deckels für ein Gehäuse (26) der Batteriezelle (1) kontaktiert werden,
- wobei an einer Oberseite (Fo) bzw. einer Unterseite (Fu) des Schichtstapels (2) jeweils wenigstens eine Isolierlage (IL) derart befestigt wird, dass der Schichtstapel (2) von der Isolierlage (IL) überragt wird,
- wobei die freien Enden (E2) der besagten Isolierlagen (IL) jeweils unter Ausbildung einer Faltung (24) von oben bzw. von unten zu den Büscheln (6a) der Anoden-Ableiterbahnen (4a) bzw. Kathoden-Ableiterbahnen (4k) hin geführt werden,
- wobei der Deckel (8) bzw. der jeweilige Deckel zum Schichtstapel (2) hin angedrückt wird, sodass auf die freien Enden (E2) der besagten Isolierlagen (IL) jenseits der jeweiligen Faltung (24) ein Druck ausgeübt wird, und
- wobei der Schichtstapel (2) mit dem angedrücktem Deckel (8) befestigt wird, und dabei oder danach im Gehäuse (26) eingeschlossen wird.

8. Verfahren nach Anspruch 7,
- wobei zunächst die an einer ersten Stirnseite (F1) aus dem Schichtstapel (2) geführten Anoden-Ableiterbahnen (4a) oder Kathoden-Ableiterbahnen (4k) büschelartig zusammengeführt werden und mit dem zugehörigen Anoden-Stromsammler (12a) bzw. einem Kathoden-Stromsammler eines ersten Deckels (8) für das Gehäuse (26) der Batteriezelle (1) kontaktiert werden,
- wobei der erste Deckel (8) zum Schichtstapel (2) hin angedrückt wird, und der Schichtstapel (2) mit dem angedrücktem Deckel (8) befestigt wird,
- wobei anschließend die aus einer der ersten Stirnseite (F1) gegenüberliegenden zweiten Stirnseite aus dem Schichtstapel (2) geführten, jeweils anderen Ableiterbahnen der Anoden-Ableiterbahnen (4a) oder Kathoden-Ableiterbahnen (4k) büschelartig zusammengeführt werden und mit dem zugehörigen jeweils andere Stromsammler des Anoden-Stromsammler (12a) bzw. Kathoden-Stromsammlers kontaktiert werden, welcher in einem zweiten Deckel für das Gehäuse (26) angeordnet ist,
- wobei der zweite Deckel zum Schichtstapel (2) hin angedrückt wird, sodass auf die freien Enden der zugehörigen Isolierlagen jenseits ihrer jeweiligen Faltung ein Druck ausgeübt wird, und
- wobei der Schichtstapel mit dem befestigten ersten Deckel (8) und dem angedrückten zweiten Deckel im Gehäuse (26) eingeschlossen wird.

9. Verfahren nach Anspruch 7 oder Anspruch 8,
wobei wenigstens eine der besagten Isolierlagen (IL) durch einen Niederhalter (20) von oben bzw. von unten zu den Büscheln (6a) hin geführt wird,
wobei der betreffende Niederhalter (20) während oder nach dem Andrücken des zugehörigen Deckels (20) entfernt wird.

10. Verfahren nach einem der Ansprüche 7 bis 9,
wobei die besagten Isolierlagen (IL) in einem Heißpress-Schritt oben bzw. unten am Schichtstapel (2) befestigt werden.

11. Verfahren nach Ansprüche 7 bis 9,
wobei die besagten Isolierlagen (IL) jeweils mit einem klebenden Streifen (G1) an der Oberseite (Fo) bzw. an der Unterseite (Fu) des Schichtstapels (2) befestigt werden.

## Claims

1. Battery cell (1), comprising:
- a layered stack (2), which has a plurality of anode layers (An) and a corresponding plurality of cathode layers (K),
- wherein the anode layers (An) and the cathode layers (K) are stacked alternately one on top of the other, and in each case a separator layer (S) is arranged between each anode layer (An) and each cathode layer (K), and
- wherein anode or cathode arrester tracks (4a, 4k) are led laterally out of the layered stack (2) at least on a first end side (F1) of the layered stack (2) at least from some of the anode layers (An) and/or some of the cathode layers (K),
- a housing (26) which encloses the layered stack (2) having the anode or cathode arrester tracks (4a, 4k) and which has, at least on the first end side (F1) of the layered stack (2), a first cover (8) with an inner-side anode current collector (12a) or an inner-side cathode current collector,
- wherein the anode arrester tracks (4a) or the cathode arrester tracks (4k) are in each case combined in a bundled manner and are in each case contacted on the anode current collector (12a) or on the cathode current collector, and
- at least two insulating layers (IL), which are each fastened to an upper side (Fo) or a lower side (Fu) of the layered stack (2) by a first end (E1),
- wherein the insulating layers (IL) in each case project beyond the layered stack (2) with their free, second ends (E2) and these second ends (E2) are oriented towards one another with the formation of folds (24) running towards one another, such that the bundles (6a) of the anode arrester tracks (4a) or of the cathode arrester tracks are in each case led through between the two folds (24), and
- wherein the insulating layers (IL) are held in position by a spring action of their respective folds (24) against a pressure which is exerted indirectly by the first cover (8).

2. Battery cell (1) according to Claim 1,
wherein the housing (26)
- has, on the first end side (F1) of the layered stack (2), the first cover with the inner-side anode current collector (12a), at which the anode arrester tracks (4a) led through between said folds (24) of said two insulating layers (IL) are contacted, and
- has, on a second end side of the layered stack (2) opposite the first end side (F1), a second cover with the inner-side cathode current collector (12k), at which the cathode arrester tracks (4k), which are led through between folds of two further insulating layers (IL) and which are led laterally out of the layered stack (2) at the second end side, are contacted.

3. Battery cell (1) according to Claim 1,
wherein the anode arrester tracks (4a) and the cathode arrester tracks (4k) are led laterally out of the layered stack (2) at the first end side (F1) of the layered stack (2), offset parallel to one another with respect to the profile of the anode or cathode layers,
wherein the first cover (8) has the anode current collector (12a) and the cathode current collector, at which in each case the anode arrester tracks (4a) and the cathode arrester tracks (4k) are contacted while being led through the folds (24) of said two insulating layers (IL).

4. Battery cell (1) according to Claim 1 or Claim 2,
wherein a bundle (6a) of the anode arrester tracks (4a) and/or a bundle of the cathode arrester tracks (4k) forms at least one loop (22) between the layered stack (2) and the first cover (8) or the second cover, and
wherein at least one of the two insulating layers (IL) is guided with its fold (24) in the loop (22).

5. Battery cell (1) according to Claim 4,
wherein at least one additional insulating layer is mounted on the bundle (6a) formed by the anode arrester tracks (4a) and/or on the bundle formed by the cathode arrester tracks (4k) in the region of the anode current collector (12a) or of the cathode current collector.

6. Battery cell (1) according to one of the preceding claims,
wherein the insulating layers (IL) are each produced from a polyolefin and/or a polyimide.

7. Method for producing a battery cell (1),
- wherein a plurality of anode layers (An) and a corresponding plurality of cathode layers (K) are stacked alternately to form a layered stack (2), and a separator layer (S) is arranged between each anode layer (An) and each cathode layer (K),
- wherein in each case anode arrester tracks (4a) or cathode arrester tracks (4k) are led laterally out of the layered stack (2) at least from some of the anode layers (An) and from some of the cathode layers (K) and combined in a bundled manner, and are contacted with an anode current collector (12a) or a cathode current collector of a cover (8) or in each case a cover for a housing (26) of the battery cell (1),
- wherein in each case at least one insulating layer (IL) is fastened to an upper side (Fo) or a lower side (Fu) of the layered stack (2) in such a way that the insulating layer (IL) projects beyond the layered stack (2),
- wherein the free ends (E2) of said insulating layers (IL) are each guided from above or from below towards the bundles (6a) of the anode arrester tracks (4a) or cathode arrester tracks (4k) with the formation of a fold (24),
- wherein the cover (8) or the respective cover is pressed towards the layered stack (2) such that a pressure is exerted on the free ends (E2) of said insulating layers (IL) beyond the respective fold (24), and
- wherein the layered stack (2) is fastened to the pressed-on cover (8) and is enclosed thereby or thereafter in the housing (26).

8. Method according to Claim 7,
- wherein firstly the anode arrester tracks (4a) or cathode arrester tracks (4k) led out of the layered stack (2) at a first end side (F1) are combined in a bundled manner and are contacted with the associated anode current collector (12a) or a cathode current collector of a first cover (8) for the housing (26) of the battery cell (1),
- wherein the first cover (8) is pressed towards the layered stack (2), and the layered stack (2) is fastened to the pressed-on cover (8),
- wherein subsequently the respectively other arrester tracks of the anode arrester tracks (4a) or cathode arrester tracks (4k), which are led out of the layered stack (2) from a second end side opposite the first end side (F1), are combined in a bundled manner and are contacted with the associated respectively other current collector of the anode current collector (12a) or cathode current collector which is arranged in a second cover for the housing (26),
- wherein the second cover is pressed towards the layered stack (2) such that a pressure is exerted on the free ends of the associated insulating layers beyond their respective fold, and
- wherein the layered stack with the fastened first cover (8) and the pressed-on second cover is enclosed in the housing (26).

9. Method according to Claim 7 or Claim 8,
wherein at least one of said insulating layers (IL) is guided from above or from below towards the bundles (6a) by a hold-down device (20),
wherein the relevant hold-down device (20) is removed during or after the pressing-on of the associated cover (20).

10. Method according to one of Claims 7 to 9,
wherein said insulating layers (IL) are fastened to the layered stack (2) at the top or bottom in a hot-pressing step.

11. Method according to Claims 7 to 9,
wherein said insulating layers (IL) are each fastened to the upper side (Fo) or to the lower side (Fu) of the layered stack (2) by means of an adhesive strip (G1).

## Revendications

1. Élément de batterie (1), comprenant :
- un empilement de couches (2), qui comporte une pluralité de couches anodiques (An) et une pluralité correspondante de couches cathodiques (K),
- dans lequel les couches anodiques (An) et les couches cathodiques (K) sont empilées de manière alternée les unes sur les autres, et une couche séparatrice (S) est disposée entre chaque couche anodique (An) et chaque couche cathodique (K), et
- dans lequel, au moins au niveau d'une première face frontale (F1) de l'empilement de couches (2), des pistes collectrices anodiques ou cathodiques (4a, 4k) sont acheminées latéralement hors de l'empilement de couches (2), depuis au moins certaines des couches anodiques (An) et/ou certaines des couches cathodiques (K),
- un boîtier (26) qui entoure l'empilement de couches (2) avec les pistes collectrices anodiques ou cathodiques (4a, 4k), et qui présente, au moins au niveau de la première face frontale (F1) de l'empilement de couches (2), un premier couvercle (8) doté d'un collecteur de courant anodique interne (12a) ou d'un collecteur de courant cathodique interne,
- dans lequel les pistes collectrices anodiques (4a) ou les pistes collectrices cathodiques (4k) sont respectivement rassemblées en faisceau, et sont respectivement mises en contact au niveau du collecteur de courant anodique (12a) ou du collecteur de courant cathodique, et
- au moins deux couches isolantes (IL), qui sont respectivement fixées par une première extrémité (E1) à une face supérieure (Fo) ou à une face inférieure (Fu) de l'empilement de couches (2),
- dans lequel les couches isolantes (IL) dépassent respectivement de l'empilement de couches (2) par leurs deuxièmes extrémités libres (E2), et ces deuxièmes extrémités (E2) sont orientées l'une par rapport à l'autre en formant des plis (24) s'étendant les uns par rapport aux autres de telle sorte que les faisceaux (6a) des pistes collectrices anodiques (4a) ou des pistes collectrices cathodiques soient respectivement guidés entre les deux plis (24), et
- dans lequel les couches isolantes (IL) sont maintenues en position par une action de ressort de leurs plis respectifs (24) contre une pression exercée indirectement par le premier couvercle (8).

2. Élément de batterie (1) selon la revendication 1,
dans lequel le boîtier (26)
- présente, au niveau de la première face frontale (F1) de l'empilement de couches (2), le premier couvercle doté du collecteur de courant anodique interne (12a), au niveau duquel les pistes collectrices anodiques (4a), guidées entre lesdits plis (24) desdites deux couches isolantes (IL), sont mises en contact, et
- présente, au niveau d'une deuxième face frontale de l'empilement de couches (2) opposée à la première face frontale (F1), un deuxième couvercle doté du collecteur de courant cathodique interne (12k), au niveau duquel sont mises en contact les pistes collectrices cathodiques (4k), qui sont guidées entre les plis de deux autres couches isolantes (IL) et qui sont acheminées latéralement hors de l'empilement de couches (2) au niveau de la deuxième face frontale.

3. Élément de batterie (1) selon la revendication 1,
dans lequel les pistes collectrices anodiques (4a) et les pistes collectrices cathodiques (4k) sont acheminées latéralement hors de l'empilement de couches (2) au niveau de la première face frontale (F1) de l'empilement de couches (2), décalées parallèlement l'une par rapport à l'autre par rapport au profil des couches anodiques ou cathodiques,
dans lequel le premier couvercle (8) présente le collecteur de courant anodique (12a) et le collecteur de courant cathodique, au niveau desquels les pistes collectrices anodiques (4a) et les pistes collectrices cathodiques (4k) sont respectivement mises en contact en étant guidées à travers les plis (24) desdites deux couches isolantes (IL).

4. Élément de batterie (1) selon la revendication 1 ou la revendication 2,
dans lequel un faisceau (6a) des pistes collectrices anodiques (4a) et/ou un faisceau des pistes collectrices cathodiques (4k) forme au moins une boucle (22) (Schlaufe) entre l'empilement de couches (2) et le premier couvercle (8) ou le deuxième couvercle, et
dans lequel au moins une des deux couches isolantes (IL) est guidée par son pli (24) dans la boucle (22).

5. Élément de batterie (1) selon la revendication 4,
dans lequel au moins une couche isolante supplémentaire est fixée sur le faisceau (6a) formé par les pistes collectrices anodiques (4a) et/ou sur le faisceau formé par les pistes collectrices cathodiques (4k) dans la zone du collecteur de courant anodique (12a) ou du collecteur de courant cathodique.

6. Élément de batterie (1) selon l'une des revendications précédentes,
dans lequel les couches isolantes (IL) sont respectivement produites à partir d'une polyoléfine et/ou d'un polyimide.

7. Procédé de fabrication d'un élément de batterie (1),
- dans lequel une pluralité de couches anodiques (An) et une pluralité correspondante de couches cathodiques (K) sont empilées de manière alternée pour former un empilement de couches (2), et dans lequel une couche séparatrice (S) est disposée entre chaque couche anodique (An) et chaque couche cathodique (K),
- dans lequel des pistes collectrices anodiques (4a) ou des pistes collectrices cathodiques (4k) sont acheminées latéralement hors de l'empilement de couches (2) et sont rassemblées en faisceau, depuis au moins certaines des couches anodiques (An) et d'au moins certaines des couches cathodiques (K), et sont mises en contact avec un collecteur de courant anodique (12a) ou un collecteur de courant cathodique d'un couvercle (8) ou d'un couvercle respectif destiné à un boîtier (26) de l'élément de batterie (1),
- dans lequel au moins une couche isolante (IL) est respectivement fixée sur une face supérieure (Fo) ou une face inférieure (Fu) de l'empilement de couches (2) de telle sorte que la couche isolante (IL) dépasse de l'empilement de couches (2),
- dans lequel les extrémités libres (E2) desdites couches isolantes (IL) sont respectivement guidées par le haut ou par le bas vers les faisceaux (6a) des pistes collectrices anodiques (4a) ou des pistes collectrices cathodiques (4k), avec formation d'un pli (24),
- dans lequel le couvercle (8) ou le couvercle respectif est repoussé vers l'empilement de couches (2) de telle sorte qu'une pression est exercée sur les extrémités libres (E2) desdites couches isolantes (IL) au-delà du pli respectif (24), et
- dans lequel l'empilement de couches (2) est fixé avec le couvercle repoussé (8) et enfermé lors de cela ou après cela dans le boîtier (26).

8. Procédé selon la revendication 7,
- dans lequel les pistes collectrices anodiques (4a) ou les pistes collectrices cathodiques (4k), acheminées hors de l'empilement de couches (2) sur une première face frontale (F1), sont tout d'abord rassemblées en faisceau et sont mises en contact avec le collecteur de courant anodique (12a) ou un collecteur de courant cathodique associé d'un premier couvercle (8) destiné au boîtier (26) de l'élément de batterie (1),
- dans lequel le premier couvercle (8) est repoussé vers l'empilement de couches (2), et l'empilement de couches (2) est fixé au couvercle repoussé (8),
- dans lequel les autres pistes collectrices respectives des pistes collectrices anodiques (4a) ou des pistes collectrices cathodiques (4k), qui sont acheminées hors de l'empilement de couches (2) depuis une deuxième face frontale opposée à la première face frontale (F1), sont ensuite rassemblées en faisceau et sont mises en contact avec l'autre collecteur de courant respectif parmi le collecteur de courant anodique (12a) ou le collecteur de courant cathodique, qui est disposé dans un deuxième couvercle destiné au boîtier (26),
- dans lequel le deuxième couvercle est repoussé vers l'empilement de couches (2) de telle sorte qu'une pression est exercée sur les extrémités libres des couches isolantes associées, au-delà de leur pli respectif, et
- dans lequel l'empilement de couches, avec le premier couvercle fixé (8) et le deuxième couvercle repoussé, est enfermé dans le boîtier (26).

9. Procédé selon la revendication 7 ou la revendication 8,
dans lequel au moins l'une desdites couches isolantes (IL) est guidée depuis le haut ou depuis le bas vers les faisceaux (6a) par un organe de retenue (20),
dans lequel l'organe de retenue (20) concerné est retiré pendant ou après que le couvercle (20) associé a été repoussé.

10. Procédé selon l'une quelconque des revendications 7 à 9,
dans lequel lesdites couches isolantes (IL) sont fixées en haut ou en bas de l'empilement de couches (2) lors d'une étape de pressage à chaud.

11. Procédé selon les revendications 7 ou 9,
dans lequel lesdites couches isolantes (IL) sont respectivement fixées à la face supérieure (Fo) ou à la face inférieure (Fu) de l'empilement de couches (2) au moyen d'une bande adhésive (G1).
